# EUROPEAN PATENT APPLICATION

(11) **EP 1 764 941 A2**
(43) Date of publication of application: **21.03.2007**
(21) Application number: 06019371.1
(22) Date of filing: 15.09.2006
(51) Int. Cl.: H04L 1/00

(54) **Apparatus and method of multicyclic redundancy checking for section detection and reliability information acquisition in a DVBH system**

(30) Priority: 16.09.2005 KR 20050086901
(71) Applicant: Samsung Electronics Co., Ltd., Yeongtong-gu Suwon-si, Gyeonggi-do (KR)
(72) Inventor: Yoon, Jung-Wook, Yeongtong-gu, Suwon-si, Gyeonggi-do (KR); Ha, Ji-Won, Yeongtong-gu, Suwon-si, Gyeonggi-do (KR); Kim, Min-Goo, Yeongtong-gu, Suwon-si, Gyeonggi-do (KR); Park, Sung-Jin, Yeongtong-gu, Suwon-si, Gyeonggi-do (KR)
(74) Representative: Lang, Johannes

(57) **Abstract**

A method and apparatus of multi-Cyclic Redundancy Checking (CRC) are provided for section detection and reliability information acquisition in a Digital Video Broadcasting-Handheld (DVB-H) system. A Packet Identifier (PID) filtering process is performed for a packet received through a radio network. A transport stream packet including section data is detected. A CRC process is performed for a payload of an associated section using header information of the section data and frame buffering is processed. The method and apparatus can perform CRC in a parallel fashion using multiple CRC checkers without interference between adjacent sections and can perform section detection and reliability verification.

## Description

### BACKGROUND OF THE INVENTION

### 1. Field of the Invention

The present invention generally relates to an apparatus and method of multi-Cyclic Redundancy Checking (CRC) in a Digital Video Broadcasting-Handheld (DVB-H) system, and more particularly to an apparatus and method of multi-CRC for section detection and reliability information acquisition in a DVB-H system.

### 2. Description of the Related Art

Recently, with the development of communication technology and data compression technology of audio, video, and data digital broadcasting is being realized which can provide high quality audio and video services through fixed or mobile terminals. Conventionally, the digital broadcasting is a service for providing users with high-quality images and Compact Disk (CD)-quality sound that can replace the conventional analog broadcasting. The digital broadcasting has developed into two types of terrestrial broadcasting and satellite broadcasting. Terrestrial broadcasting is a digital broadcasting service using a terrestrial relay, whereas satellite broadcasting is a digital broadcasting service using a satellite relay.

Examples of digital broadcasting systems are a Digital Audio Broadcasting (DAB) system, a Digital Radio Broadcasting (DRB) system, a digital audio radio broadcasting system, and a Digital Multimedia Broadcasting (DMB) system capable of providing all audio, video and data services. Recently, interest is focusing on European Research Coordination Agency Project-147 (Eureka 147) serving as the DAB system in Europe, a Digital Video Broadcasting-Terrestrial (DVB-T) system based on one of digital broadcasting standards, and a Digital Video Broadcasting-Handheld (DVB-H) system with enhanced portability.

A physical layer standard of the DVB-H system follows the specifications of the existing DVB-T system and supports additional error correction encoding technology such as Multi Protocol Encapsulation-Forward Error Correction (MPE-FEC) for guaranteeing stable reception on the move.

In the DVB-H system, broadcast data is formed by Internet Protocol (IP) datagrams. The IP datagrams are Reed-Solomon (RS) encoded and an MPE-FEC frame is generated. The MPE-FEC frame is constructed with an MPE section carrying an IP datagram and an MPE-FEC section carrying parity data according to the RS encoding. The MPE and MPE-FEC sections are carried and transmitted in a payload of a Transport Stream (TS) packet serving as a transmission unit of the DVB-H system through a physical layer.

Data constructing the MPE-FEC frame is re-constructed in a transmission unit of sections. An IP datagram is re-constructed in an MPE section by adding a section header and 32 CRC bits. Further, RS data is re-constructed in an MPE-FEC section by adding a section header and 32 CRC bits. The section header contains information necessary for MPE-FEC decoding and time slicing and is placed in a front part of the section. The 32 CRC bits are placed in a rear part of the section. These sections are carried in a payload of a TS packet and are transmitted through the physical layer.

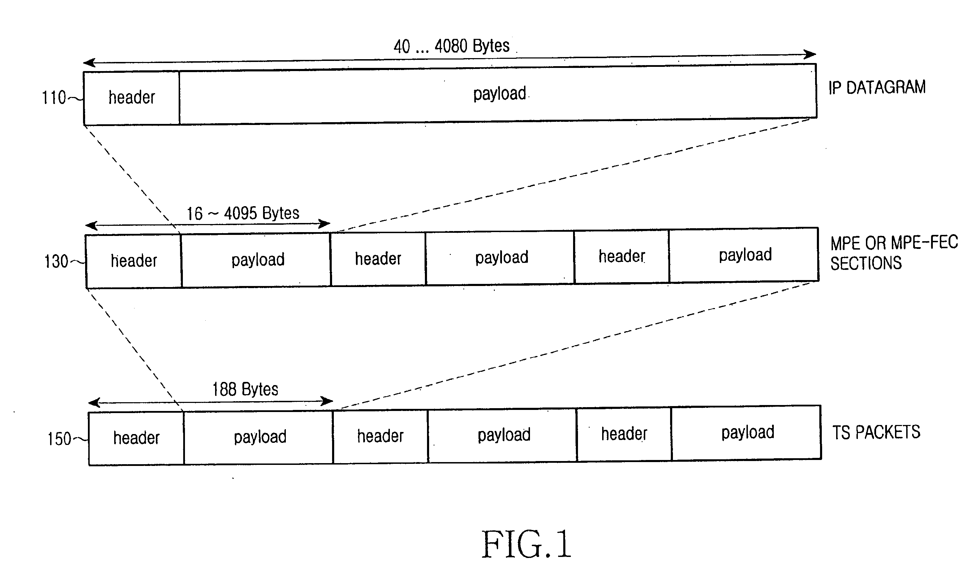

FIG. 1 illustrates a data structure of a TS packet in a conventional DVB-H system.

Referring to FIG. 1, reference numeral 110 denotes an IP datagram carrying broadcast data. The datagram is a packet including address information of a network terminator to which data is transmitted. Reference numeral 130 denotes an MPE section carrying an IP datagram 110 or an MPE-FEC section carrying parity data for IP datagrams 110. Reference numeral 150 denotes a TS packet carrying the MPE or MPE-FEC section 130. Herein, one TS packet 150 can include multiple MPE or MPE-FEC sections 130 or one MPE or MPE-FEC section 130 can be transmitted through multiple TS packets 150.

As a result of the MPE-FEC step, IP datagrams are RS encoded, thereby forming an MPE-FEC frame. Data forming the MPE-FEC frame is re-constructed in a transmission unit of a section. The IP datagram 110 is re-constructed in an MPE section by adding a section header and 32 CRC bits. Further, RS data is re-constructed in an MPE-FEC section by adding a section header and 32 CRC bits. The section header contains information necessary for MPE-FEC processing and time slicing and is placed in a front part of the section. Herein, the 32 CRC bits are placed in a rear part of the section. These sections are carried in a payload of the TS packet 150 and are transmitted through the physical layer.

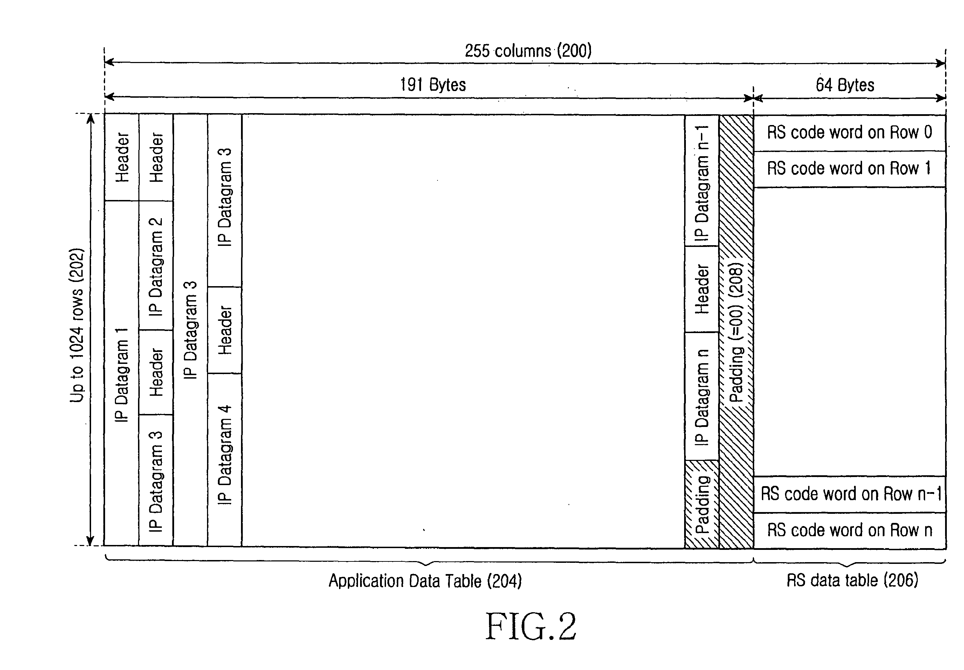

A process for generating the MPE or MPE-FEC section in a transmitter will be described with reference to FIG. 2. The DVB-H transmitter conventionally performs an RS encoding operation once in each of a physical layer and a link layer. As described with reference to FIG. 2, the RS encoding operation is performed in the link layer.
Referring to FIG. 2, reference numeral 200 denotes a column size of an MPE-FEC frame in the DVB-H system, and reference numeral 202 denotes a row size of the MPE-FEC frame in the DVB-H system. The column size 200 is 255 bytes. In the left part of the MPE-FEC frame, an application data table region 204 has a size of 191 bytes to store an MPE section including an IP datagram corresponding to broadcast data. In the right part of the MPE-FEC frame, an RS data table region 206 has a size of 64 bytes to store RS data or parity data generated by RS-encoding the broadcast data stored in the application data table region 204. The row size 202 is variable and can have a maximum of 1024 rows.

As illustrated in FIG. 2, the application data table region 204 stores N IP datagrams in the vertical direction. When the application data table region 204 is not filled with IP Datagrams 1 to N, a zero-padding process is performed for the remaining space, such that the application data table region 204 is filled. After the IP datagrams are stored or the zero-padding process is performed for the application data table region 204, an RS encoding operation is performed in the horizontal direction. The RS data table region 206 is filled with parity data generated by performing the RS encoding operation, in the horizontal direction.

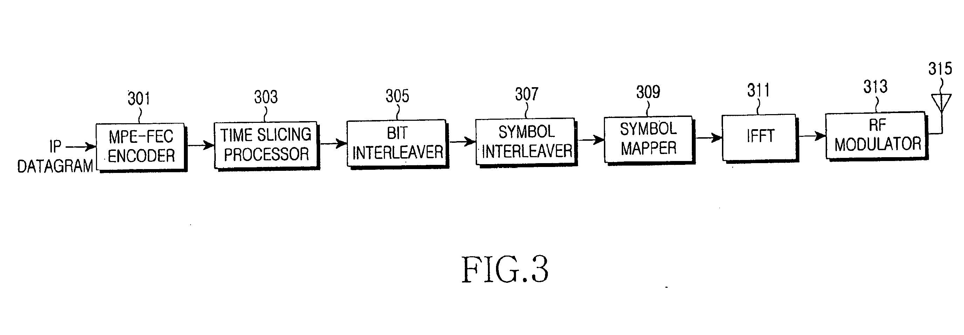

FIG. 3 is a block diagram illustrating an internal structure of the transmitter in the conventional DVB-H system. As illustrated in FIG. 3, the DVB-H system can transmit IP data serving as broadcast data to multiple users and also can transmit RS parity data for error correction of the broadcast data.

Referring to FIG. 3, an MPE-FEC encoder 301 generates an MPE section including an IP datagram such that the IP datagram serving as the broadcast data is transmitted in a section unit and generates an MPE-FEC section including parity data for FEC of the MPE section. The parity data is generated through RS encoding corresponding to the well-known outer encoding technology. An output of the MPE-FEC encoder 301 is transferred to a time slicing processor 303, such that a time division process is performed to transmit broadcast data in a burst. One MPE-FEC frame is transmitted in one burst interval. After the time slicing process, the IP datagram is processed in a High-Priority (HP) stream. Then, a serial-to-parallel signal conversion process is performed in modulation order and hierarchical or non-hierarchical transmission mode.

To distribute transmission error, a bit interleaver 305 performs an interleaving process in a bit unit and a symbol interleaver 307 performs an interleaving process in a symbol unit. A symbol mapper 309 performs a symbol mapping process for an interleaved signal in a predefined modulation scheme such as Quadrature Phase Shift Keying (QPSK), 16-Quadrature Amplitude Modulation (16QAM) or 64-Quadrature Amplitude Modulation (64QAM), and transfers a result of the symbol mapping process to an Inverse Fast Fourier Transform (IFFT) processor 311. The IFFT processor 311 transforms a frequency domain signal to a time domain signal and then outputs the time domain signal. A Guard Interval (GI) inserter (not shown) inserts a GI into a signal for which an IFFT process has been performed. Then, an Orthogonal Frequency Division Multiplexing (OFDM) symbol signal of a baseband is generated. The OFDM symbol signal is pulse-shaped in a digital baseband filter (notshown) and is modulated in a Radio Frequency (RF) modulator 313. After the modulation, the OFDM symbol signal is transmitted in a TS packet corresponding to a DVB-H signal through an antenna 315.

A receiver of the DVB-H system receives the TS packet through a physical layer and recovers an IP datagram including the broadcast data. The DVB-H receiver requires MPE-FEC decoding technology for separately extracting an MPE section and an MPE-FEC section from the TS packet, constructing the extracted data in an MPE-FEC frame, and recovering the IP datagram. A concrete standard for the transmission technology for the current DVB-H system has been provided, but a concrete method for the reception technology such as MPE-FEC decoding technology has not been provided. In particular, the receiver requires a process for detecting a received MPE or MPE-FEC section carried by a TS packet and acquiring reliability information as a task for decoding an MPE-FEC frame and recovering an IP datagram.

The length of a section contained in a payload of the TS packet may be different from the length of the payload of the TS packet. Multiple sections may be contained in one TS packet payload and one section may be transmitted over multiple TS packet payloads. A section starts with a 1-byte table Identifier (ID) for identifying a section type. The length of the current section is indicated in a section header. To acquire reliability information necessary for the RS decoding, CRC is performed on the basis of the table ID and the start and end of each section within the TS packet should be detected.

Although byte data corresponding to the table ID has been detected, an exact start point of the detected byte data should be verified through CRC. A point of time when a CRC result is determined to be good becomes the end of the section. However, when a single CRC process is performed, the CRC result may not be determined to be good in the end of an actual section and therefore the CRC process may be continuously performed, if transmission error has occurred or the CRC process has not been started correctly from the beginning of the actual section although it has been started from data corresponding to a table ID. This case affects the next section. The start and end of the next section may not be detected, the CRC result may not be determined to be good, or the CRC result may be determined to be good at an arbitrary time. That is, there is a problem in that the start and end of a section may not be correctly detected and reliability information of the section may not be acquired.

### SUMMARY OF THE INVENTION

It is, therefore, an aspect of the present invention to provide an apparatus and method of multi-cyclic redundancy checking for section detection and reliability information acquisition in a receiver of a Digital Video Broadcasting-Handheld (DVB-H) system.

In accordance with an aspect of the present invention, there is provided a method of multi-Cyclic Redundancy Checking (CRC) for section detection and reliability information acquisition in a Digital Video Broadcasting-Handheld (DVB-H) system that includes performing a Packet Identifier (PID) filtering process for a packet received through a radio network and detecting a transport stream packet that includes section data; and performing a CRC process for a payload of an associated section using header information of the section data and processing frame buffering.

In accordance with another aspect of the present invention, there is provided an apparatus of multi-Cyclic Redundancy Checking (CRC) for section detection and reliability information acquisition in a Digital Video Broadcasting-Handheld (DVB-H) system that includes a buffer unit for storing Multi Protocol Encapsulation (MPE) section data extracted from a received transport stream packet in a data region and storing parity data of an MPE-Forward Error Correction (FEC) section in a parity region; CRC checkers for performing a CRC process from the section data and determining whether a CRC results in no error being detected; and a controller for initializing the CRC checkers, attempting to detect a table Identifier (ID), repeating the table ID detection when the table ID is not detected, allocating and operating a CRC checker whenever the table ID is detected, determining whether the CRC results in no error being detected in the allocation CRC checker, and processing the frame buffering from the section data.

### BRIEF DESCRIPTION OF THE DRAWINGS

The above and other objects and aspects of the present invention will be more clearly understood from the following detailed description taken in conjunction with the accompanying drawings, in which:
FIG. 1 illustrates a data structure of a Transport Stream (TS) packet in a conventional Digital Video Broadcasting-Handheld (DVB-H) system;
FIG. 2 illustrates a Reed-Solomon (RS) encoding operation in a transmitter of the conventional DVB-H system;
FIG. 3 is a block diagram illustrating an internal structure of the transmitter in the conventional DVB-H system;
FIG. 4 is a block diagram illustrating an internal structure of a receiver in a DVB-H system in accordance with the present invention;
FIG. 5 is a block diagram illustrating an internal structure of a Multi Protocol Encapsulation-Forward Error Correction (MPE-FEC) frame decoder in accordance with the present invention;
FIG. 6 is a flowchart illustrating a process for starting section detection when a TS packet is input in accordance with the present invention;
FIG. 7 illustrates a process for sequentially storing a payload of a TS packet in a circular buffer in a byte unit;
FIG. 8 illustrates a process for allocating multiple Cyclic Redundancy Checking (CRC) checkers in accordance with the present invention; and
FIG. 9 is a flowchart illustrating a process for allocating multiple CRC checkers in accordance with the present invention.

### DETAILED DESCRIPTION OF THE PREFERRED EMBODIMENTS

Preferred embodiments of the present invention will be described in detail herein below with reference to the accompanying drawings. In the drawings, the same or similar elements are denoted by the same reference numerals even though they are depicted in different drawings. In the following description, detailed descriptions of functions and configurations incorporated herein that are well known to those skilled in the art are omitted for clarity and conciseness. It is to be understood that the phraseology and terminology employed herein are for the purpose of description and should not be regarded as limiting the present invention.

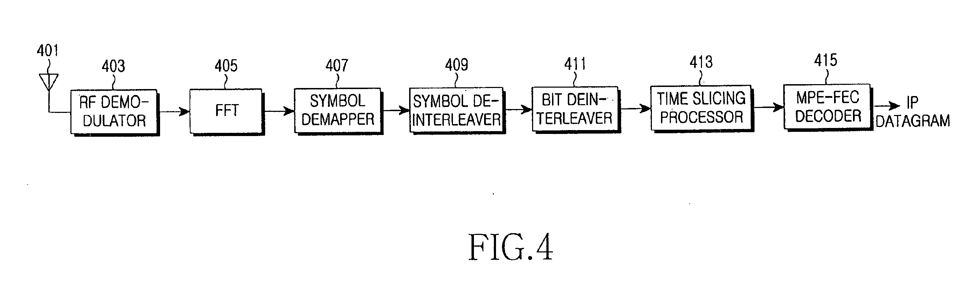

FIG. 4 is a block diagram illustrating an internal structure of a receiver in a Digital Video Broadcasting-Handheld (DVB-H) system in accordance with of the present invention.

Referring to FIG. 4, a Transport Stream (TS) packet received from a radio network is output to a Radio Frequency (RF) demodulator 403 through an antenna 401. The RF demodulator 403 performs a frequency down-conversion process for a signal of the TS packet. A Fast Fourier Transform (FFT) processor 405 transforms an Orthogonal Frequency Division Multiplexing (OFDM) symbol signal of the TS packet, converted into a digital signal, to a frequency domain signal. A symbol demapper 407 performs a symbol demapping process for the received signal in relation to a predefined modulation scheme such as Quadrature Phase Shift Keying (QPSK), 16-Quadrature Amplitude Modulation (16QAM) or 64-Quadrature Amplitude Modulation (64QAM). A symbol deinterleaver 409 performs a deinterleaving process in a symbol unit and a bit deinterleaver 411 performs a deinterleaving process in a bit unit, thereby recovering an original signal. Further, a time slicing processor 413 repeats a switching operation such that a TS packet including a Multi Protocol Encapsulation-Forward Error Correction (MPE-FEC) frame can be received in every predefined burst-duration. Information about the burst duration is included in a header of an MPE or MPE-FEC section. A start time of the next burst duration can be detected by receiving delta-T information.

In FIG. 4, an MPE-FEC decoder 415 performs a Packet Identifier (PID) filtering process. When a PID is detected from header information of a TS packet, the MPE-FEC decoder 415 determines that an MPE or MPE-FEC section has been received. When no PID is detected, the MPE-FEC decoder 415 receives Program Specific Information/Service Information (PSI/SI) (hereinafter, referred to as broadcasting service information) from the TS packet and receives broadcasting reception related service information indicating if time slicing or MPE-FEC is to be applied. When receiving the broadcasting service information, the MPE-FEC decoder 415 separates an IP datagram of an MPE section and parity data of an MPE-FEC section configuring an MPE-FEC frame from the received TS packet, stores the IP datagram and the parity data in data and parity regions of an internal buffer, and recovers original broadcast data by performing Reed-Solomon (RS) decoding.

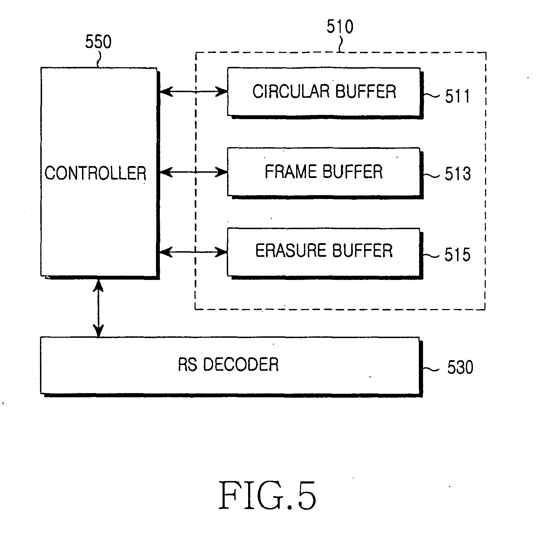

FIG. 5 is a block diagram illustrating an internal structure of an MPE-FEC frame decoder in accordance with the present invention.

Referring to FIG. 5, the MPE-FEC frame decoder includes a buffer unit 510, an RS decoder 530, and a controller 550. The buffer unit 510 temporarily stores an IP datagram of an MPE section and parity data of an MPE-FEC section extracted from a received TS packet. The RS decoder 530 performs error correction of the IP datagram using the parity data. The controller 550 controls an overall operation for analyzing broadcasting service information, determining whether to apply the MPE-FEC, extracting the IP datagram and the parity data from the MPE and MPE-FEC sections, storing the extracted IP datagram and parity data in the buffer unit 510, and RS decoding the IP datagram in the RS decoder 530.

The buffer unit 510 includes a circular buffer 511 for performing CRC for the MPE and MPE-FEC sections, a frame buffer 513 for separately storing the IP datagram of the MPE section and the parity data of the MPE-FEC section and performing the RS decoding, and an erasure buffer 515 for marking reliability information according to a CRC result. When the TS packet is received, the controller 550 first analyzes the broadcasting service information (PSI/SI) and determines whether to apply the MPE-FEC. Then, the controller 550 stores in the circular buffer 511 the MPE or MPE-FEC section from which header information of the received TS packet has been removed and performs the CRC.

When the MPE-FEC application is currently indicated, a 4-byte header of the TS packet is removed and a 184-byte payload is sequentially stored in the circular buffer in a byte unit. The purpose of circular buffering is to perform the CRC process for the current MPE or MPE-FEC section in the byte unit and store received section data until the section payload (of an IP program or RS data) is transferred to the frame buffer. If data is filled at the last address of the circular buffer, the next buffering position becomes Address 0.

The start and end of the MPE or MPE-FEC section carried and transmitted in the payload of the TS packet should be detected and a start part (or a table ID) of the section should be detected to start the CRC process for MPE-FEC frame data constructed with the sections. In the MPE section, an 8-bit start part of a section header is 0x3e. In the MPE-FEC section, an 8-bit start part of a section header is 0x78. Whenever a TS packet is input, the start part of the MPE or MPE-FEC section can be detected in a byte unit.

When the table ID (of 0x3e or 0x78) corresponding to the start part of the section is detected, the controller sets the table ID to the starting point and allocates a CRC checker thereof, and performs a CRC process. If the table ID is additionally detected even when a CRC results in errors being detected in the CRC checker currently operating, a new CRC checker is allocated and the CRC process is additionally performed. That is, multiple CRC checkers can simultaneously operate. When the CRC results in no errors being detected in any one of the CRC checkers, all the CRC checkers in progress are stopped.

When the current TS packet input is completed, a waiting state is maintained until a packet with the next MPE PID is input. When the next MPE packet starts to be input, CRC processes of all the CRC checkers operated before the waiting state are resumed. When the next MPE packet is input while a state of a shift register of the CRC checker is maintained, the CRC process is resumed. However, the CRC process is not resumed only when the MPE-FEC frame ends and the TS packet input stops.

When the CRC results in no errors being detected in any one of the CRC checkers currently operating, it is determined that at least one MPE or MPE-FEC section is present over a CRC interval in which the CRC results in no errors being detected. Information necessary for MPE-FEC decoding is extracted from a section header. As shown in Table 1, information is extracted from the section header.

**Table 1**

| **Header Information** | **Description** |
|---|---|
| table_id | Indicate a type of MPE or MPE-FEC section |
| section_length | Indicates the number of bytes from the 4th byte of the section to the end of the section including 32 CRC bits |
| padding_column | Indicates the number of zero-padded columns in a data region of an MPE-FEC frame (and indicates a value from 0 to 190) |
| table_boundary | Indicates that the current section is the last section in a data or parity region of the MPE-FEC frame (when set to "1") |
| Address | Indicates a position of the first byte in a payload of the currently received section in each region of the MPE-FEC frame. |

When the section's header information is extracted, it is determined whether the section has been correctly received by first comparing the header information of section_length with a CRC interval in which a CRC results in no errors being detected in a CRC checker. When CRC results in no errors being detected in multiple CRC checkers, operation intervals of all the CRC checkers are compared with section_length and the start and end of the section is identified from an interval matched with section_length, such that it is determined that the section has been detected. While the section detection is performed, circular buffering, table ID detection, and CRC are continuously performed if an MPE packet is input.

When the CRC results in no errors being detected the controller 550 retrieves header information of the associated section data, stores a payload (or IP datagram) of the MPE section in a data region of the frame buffer 513, and stores a payload (or parity data) of the MPE-FEC section in a parity region of the frame buffer 513. The controller 550 marks reliability information in the erasure buffer 515 according to whether the IP datagram and the parity data have been received normally. The controller 550 controls the RS decoder 530 to perform RS decoding and error correction operations on an IP datagram in which reception error has occurred using the parity data and then outputs the IP datagram to a higher layer.

If reliability information for all regions of the erasure buffer 515 has been marked, that is, all IP datagrams of the MPE-FEC frame has been received normally, the controller 550 stops the RS decoding operation.

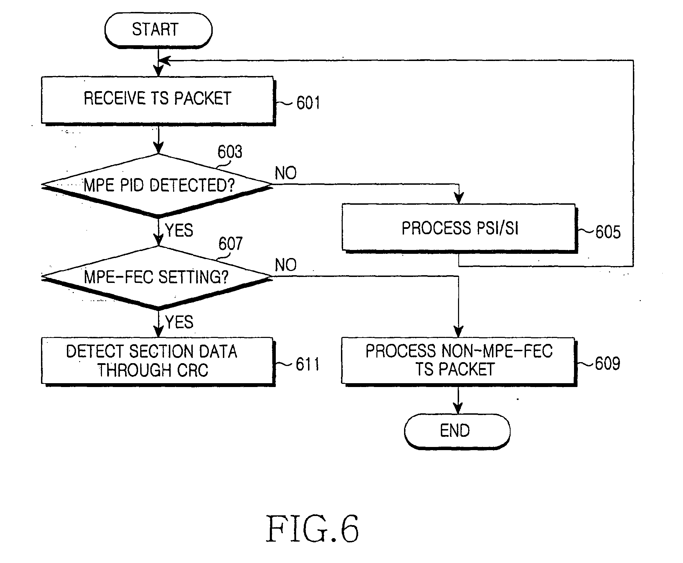

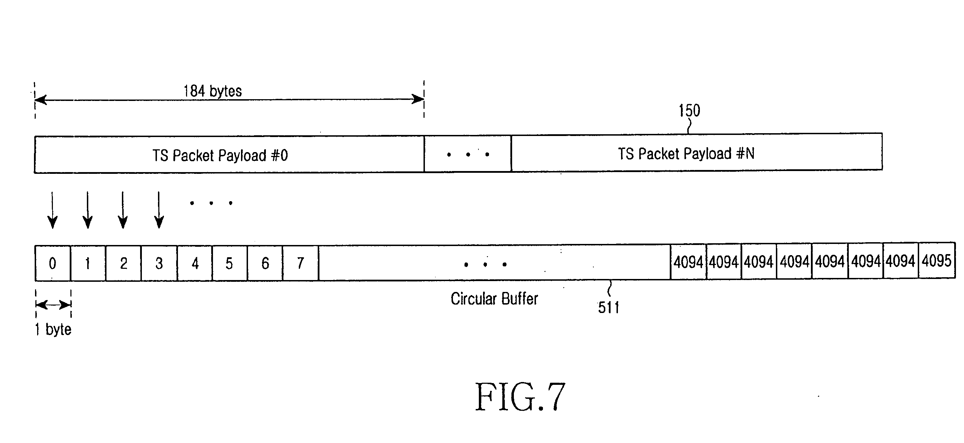

FIG. 6 is a flowchart illustrating a process for starting section detection when a TS packet is input in accordance with the present invention. FIG. 7 illustrates a process for sequentially storing a payload of a TS packet in the circular buffer in a byte unit.

Referring to FIG. 6, the controller 550 of FIG. 5 receives a TS packet from a physical layer in step 601 and performs a PID filtering process for the received TS packet in step 603. If a MPE PID of the TS packet carrying the MPE or MPE-FEC section is not detected as a result of the PID filtering process, the controller 550 regards the associated TS packet as a packet for transferring broadcasting service information (PSI/SI) and determines whether to apply time slicing and MPE-FEC in step 605. The controller 550 proceeds to step 601 to receive the next TS packet. If the MPE PID is detected from the received TS packet, the controller 550 regards the associated TS packet as a packet carrying the MPE or MPE-FEC section and then proceeds to step 607.

When determining that the MPE-FEC is not applied using a broadcasting service information (PSI/SI) analysis result of step 605 in step 607, the controller 550 proceeds to step 609 to perform an operation for receiving only an MPE section from the associated TS packet. When determining that the MPE-FEC is applied in step 607, the controller 550 proceeds to step 611 to remove a 4-byte header from the TS packet as illustrated in FIG. 7 and sequentially store a 184-byte payload 150 in the circular buffer 511 of FIG. 5 in a byte unit. The purpose of circular buffering is to perform the CRC process for the currently received MPE or MPE-FEC section and store received data until the section payload (of an IP program or parity data) is transferred to the frame buffer 513. If data is filled at the last address of the circular buffer 511, the next buffering position becomes Address 0.

In step 611, the controller 550 detects the start and end of the MPE or MPE-FEC section transmitted in a payload of the TS packet and performs the CRC process whenever table_id is detected to acquire reliability information for performing an RS decoding operation on the MPE-FEC frame constructed with the sections. This is referred to as the section detection step. For example, 32-bit CRC data is added and transmitted in the end part of the MPE or MPE-FEC section. In the present invention, when a CRC results in no errors being detected the controller 550 determines that at least one MPE or MPE-FEC section is present in a CRC interval in which the CRC results in no errors being detected, and extracts information for decoding the MPE-FEC frame from header information of the section as shown in Table 1.

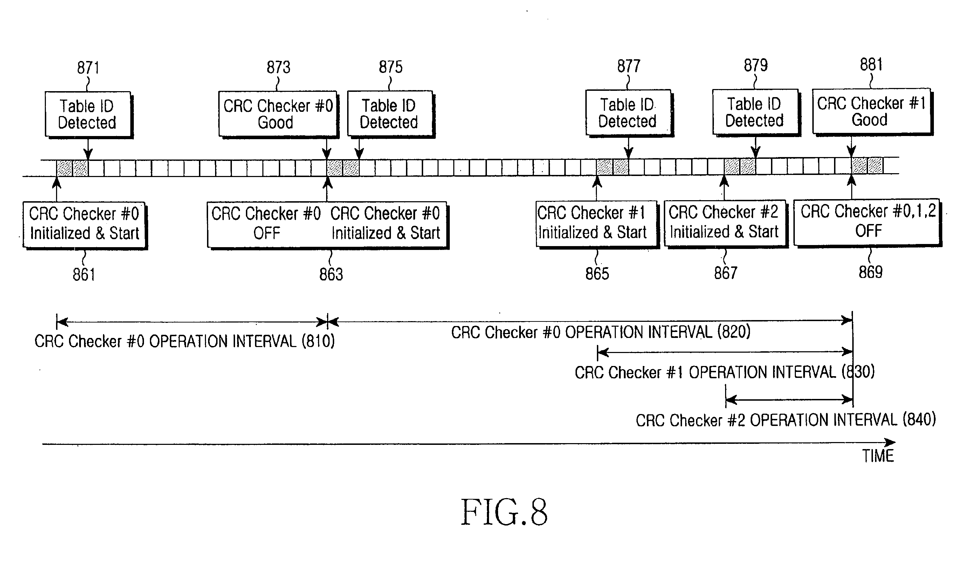

FIG. 8 illustrates a process for allocating multiple CRC checkers in accordance with the present invention.

Referring to FIG. 8, operation intervals of the CRC checkers can be divided into a single operation interval 810 of CRC Checker #0 and multiple CRC operation intervals 820, 830, and 840 of CRC Checkers #0 to #2. When the table ID is detected in the single operation interval 810 of CRC Checker #0, CRC Checker #0 861 is allocated and initialized and performs detection. When a CRC results in no errors being detected as indicated by reference number 873, CRC Checker #0 is turned off as indicated by reference numeral 863.

Whenever table IDs are detected in the multiple CRC operation intervals 820, 830, and 840 as indicated by reference numerals 875, 877, and 879, CRC Checkers #0, #1, and #2 865, 867, and 869 are allocated and initialized. While the CRC Checkers #0, #1, and #2 simultaneously operate, they all are turned off as indicated by reference numeral 869 if a CRC results in no errors being detected in at least one CRC checker as indicated by reference numeral 881.

When multiple sections are connected and transmitted in the TS packet, a detected point may not be determined to be a start part of the section even though byte data corresponding to a table ID has been detected, because the table ID can correspond to the middle data of the section. In this case, the determination should be made through CRC. When the byte data corresponding to the table ID is detected, the CRC process is started. The start and end of one section are regarded as a point of time when the CRC is started and a point of time when the CRC results in no errors being detected is determined to be good, respectively.

If transmission error has occurred or the CRC process has not been started correctly from the beginning of an actual section although it has been started from data corresponding to a table ID, the CRC results may indicate errors in the end of the actual section and therefore the CRC process may be continuously performed. This case affects the next section. The start and end of the next section may not be detected, the CRC results may indicate errors, or the CRC results may indicate no errors at an arbitrary time.

To prevent this phenomenon, new CRC is started from a start part of the section, i.e., a part in which a table ID has been found, regardless of the CRC in progress, and the CRC started previously is continuously performed. Table 2 shows a structure of a TS packet.

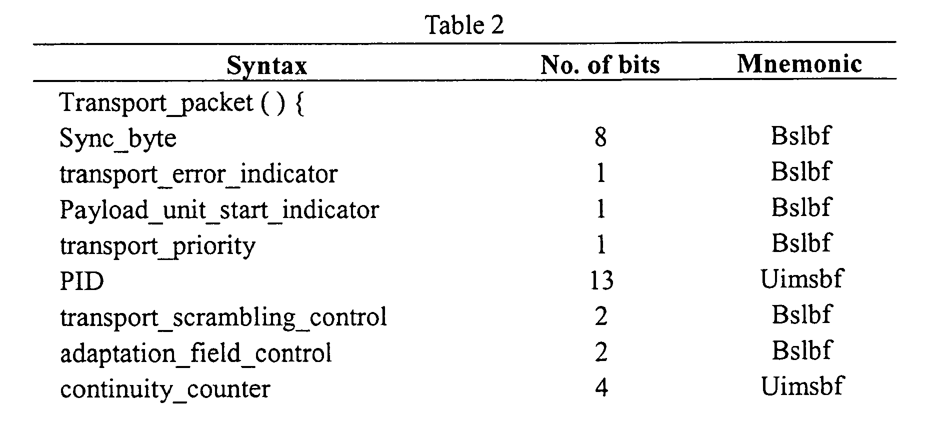

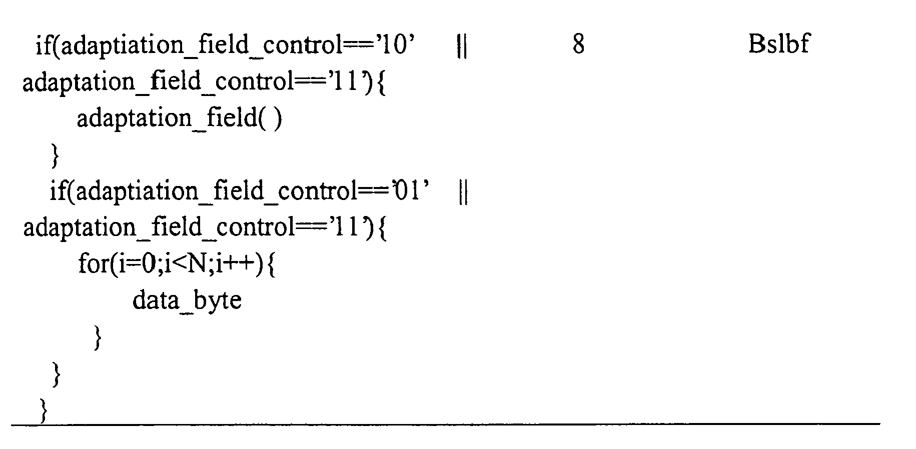

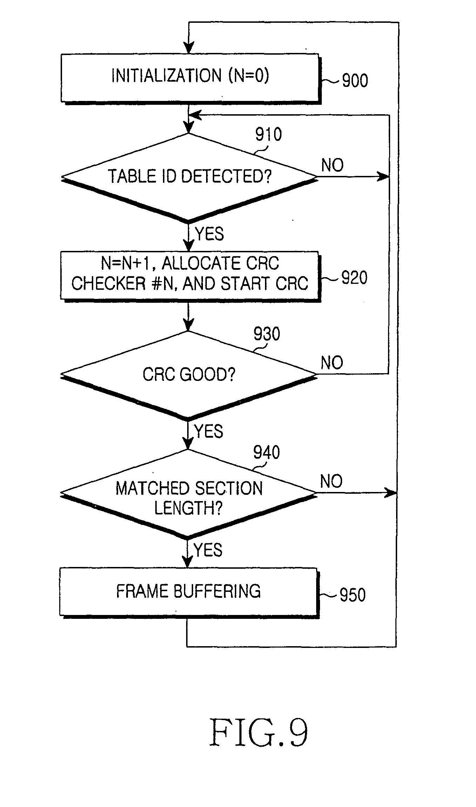

FIG. 9 is a flowchart illustrating a process for allocating multiple CRC checkers in accordance with the present invention.

Referring to FIG. 9, the controller 550 of FIG. 5 initializes CRC checkers (N = 0) in step 900. In step 910, the controller 550 attempts to detect a table ID. When the table ID is not detected, data ID detection is repeated. When the table ID is detected, CRC Checker #N (N = N + 1) is allocated and started in step 920. In step 930, the controller 550 determines whether a CRC results in no errors being detected in the allocated CRC checker. If the CRC results in errors being detected, the controller 550 performs the process again from step 910. However, if the CRC results in no errors being detected, the controller 550 determines whether a section length matches a CRC interval in step 940. If the section length does not match the CRC interval, the controller 550 performs the process again from step 900. However, if the section length matches the CRC interval, the controller 550 buffers a section in step 950 and performs the process again from step 900.

As described above, the present invention has the following advantages. The present invention can perform CRC in a parallel fashion using multiple CRC checkers without interference between adjacent sections and can perform section detection and reliability verification.

Although the exemplary embodiments of the present invention have been disclosed for illustrative purposes, those skilled in the art will appreciate that various modifications, additions, and substitutions are possible, without departing from the scope of the present invention.

## Claims

1. A method of multi-Cyclic Redundancy Checking (CRC) for section detection and reliability information acquisition in a Digital Video Broadcasting-Handheld (DVB-H) system, comprising the steps of:
performing a Packet Identifier (PID) filtering process for a packet received through a radio network;
detecting a transport stream packet comprising section data; and
performing a CRC process for a payload of an associated section using header information of the section data and processing frame buffering.

2. The method of claim 1, wherein the step of performing the CRC process comprises:
initializing CRC checkers;
attempting to detect a table ID and repeating the table ID detection when the table ID is not detected;
allocating and operating a CRC checker whenever the table ID is detected;
determining whether a CRC results in no errors being detected in the allocation CRC checker;
determining whether a section length matches a CRC interval if the CRC results in no errors being detected; and
processing the frame buffering from the section data.

3. The method of claim 2, wherein when the CRC results in no errors being detected in any one of allocated CRC checkers, an operation of the allocated CRC checkers is stopped.

4. The method of claim 2, wherein when the CRC results in errors being detected, the method returns to the step of repeating the table ID detection.

5. The method of claim 2, wherein when the section length does not match the CRC interval, the method returns to the step of initializing the CRC checkers.

6. The method of claim 1, wherein the step of performing the CRC process is repeated.

7. An apparatus of multi-Cyclic Redundancy Checking (CRC) for section detection and reliability information acquisition in a Digital Video Broadcasting-Handheld (DVB-H) system, comprising:
a buffer unit for storing Multi Protocol Encapsulation (MPE) section in a data region data extracted from a received transport stream packet and storing in a party region parity data of an MPE-Forward Error Correction (FEC) section;
CRC checkers for performing a CRC process from the section data and determining whether a CRC results in no errors being detected; and
a controller for initializing the CRC checkers, attempting to detect a table Identifier (ID), repeating the table ID detection when the table ID is not detected, allocating and operating a CRC checker whenever the table ID is detected, determining whether the CRC results in no errors being detected in the allocation CRC checker, and processing the frame buffering from the section data.

8. The apparatus of claim 7, wherein the buffer unit comprises:
a circular buffer for performing the CRC process for a payload of the MPE and MPE-FEC sections; and
a frame buffer for separately storing an Internet Protocol (IP) datagram of the MPE section and the parity data of the MPE-FEC section and performing Reed-Solomon (RS) decoding.

9. The apparatus of claim 7, wherein the CRC checker is additionally allocated whenever the table ID is detected.

10. The apparatus of claim 7, wherein when the CRC results in no errors being detected in any one of allocated CRC checkers, an operation of the allocated CRC checkers is stopped.

11. The apparatus of claim 7, wherein the controller determines whether a section length matches a CRC interval if the CRC results in no errors being detected.
